# EUROPÄISCHE PATENTSCHRIFT

(11) **EP 3 272 591 B1**
(45) Veröffentlichungstag und Bekanntmachung des Hinweises auf die Patenterteilung: **27.03.2019**
(21) Anmeldenummer: 17181235.7
(22) Anmeldetag: 13.07.2017
(51) Int. Cl.: B60R 17/02, F16N 7/38, F16N 29/02

(54) **EINRICHTUNG ZUR SCHMIERMITTELVERSORGUNG EINES FAHRZEUGSYSTEMS**
DEVICE FOR SUPPLYING LUBRICANT TO A VEHICLE SYSTEM
DISPOSITIF D'ALIMENTATION EN LUBRIFIANT D'UN SYSTÈME DU VÉHICULE

(30) Priorität: 18.07.2016 DE 102016213102
(43) Veröffentlichungstag der Anmeldung: 24.01.2018
(73) Patentinhaber: Deere & Company, Moline, IL 61265 (US)
(72) Erfinder: Letscher, Jens, 68163 Mannheim (DE); Reinmuth, Florian, 68163 Mannheim (DE)
(74) Vertreter: Dehnhardt, Florian Christopher

(56) Entgegenhaltungen:
- WO-A1-2006/084752
- DE-B3-102008 043 143
- GB-A- 2 155 417
- US-A- 3 985 205
- US-A- 5 195 612

## Beschreibung

Die Erfindung betrifft eine Einrichtung zur Schmiermittelversorgung eines Fahrzeugsystems, mit einer aus einem Schmiermittelreservoir gespeisten Schmiermittelpumpe und einem Schmiermittelverteiler, der eine Vielzahl individuell ansteuerbarer Versorgungsventile zur Einsteuerung eines Schmiermittels in Schmierpunkte zugehöriger Betriebskomponenten aufweist.

GB 2 155 417 A offenbart eine Einrichtung zur Schmiermittelversorgung eines Fahrzeugsystems gemäß dem Oberbegriff des Anspruchs 1.

Eine derartige Einrichtung in Gestalt eines zentralen Schmiersystems für ein Industriefahrzeug ist beispielsweise aus der JP 2005090597 A bekannt. Das zentrale Schmiersystem umfasst eine hydraulisch steuerbare Schmierölversorgung sowie ein Verteilungsmittel, das ausgangsseitig mit einer Vielzahl zu schmierender Betriebskomponenten des Industriefahrzeugs in Verbindung steht. Zur Durchführung eines Schmiervorgangs ist ein an einem Handhebel angeordneter Tastschalter zu betätigen, woraufhin durch Schließen eines zugehörigen elektrischen Ventils ein von der Schmierölversorgung umfasster Stempel hydraulisch derart unter Druck gesetzt wird, dass Schmieröl aus einem Kolbenraum der Schmierölversorgung in Richtung des Verteilungsmittels und damit der zu schmierenden Betriebskomponenten fließt.

Ein solches zentrales Schmiersystem findet unter anderem bei Betriebskomponenten mit sogenannter Verlustschmierung Verwendung, bei denen beim Nachschmieren das verschmutzte Schmiermittel verdrängt wird und an entsprechender Stelle der Betriebskomponente nach außen abgeführt wird. Herkömmlicherweise erfolgt das Nachschmieren von Hand, indem das Schmiermittel mittels einer Fettpresse über einen zugehörigen Schmierpunkt der Betriebskomponente appliziert wird. Das bekannte Schmiersystem entlastet den Bediener von der Durchführung dieser zeitaufwändigen Wartungsmaßnahme.

Es ist Aufgabe der vorliegenden Erfindung, eine Einrichtung der eingangs genannten Art bezüglich ihres Gebrauchsnutzens weiter zu verbessern.

Diese Aufgabe wird durch eine Einrichtung mit den Merkmalen des Patentanspruchs 1 gelöst.

Die Einrichtung zur Schmiermittelversorgung eines Fahrzeugsystems umfasst eine aus einem Schmiermittelreservoir gespeiste Schmiermittelpumpe und einen Schmiermittelverteiler, der eine Vielzahl individuell ansteuerbarer Versorgungsventile zur Einsteuerung eines Schmiermittels in Schmierpunkte zugehöriger Betriebskomponenten aufweist. Des Weiteren ist eine Kontrolleinrichtung vorhanden, die die Versorgungsventile zur Schmierung der Betriebskomponenten nach Maßgabe eines aus Betriebsinformationen der Betriebskomponenten abgeleiteten Schmiermittelbedarfs bzw. Schmiermittelverbrauchs ansteuert.

Mit anderen Worten erfolgt für jede der Betriebskomponenten nicht nur eine automatisierte und damit von der Willkür eines Bedieners unabhängige Schmierung, vielmehr ist es durch Berücksichtigung des tatsächlichen Schmiermittelbedarfs bzw. Schmiermittelverbrauchs möglich, eine Unter- bzw. Überversorgung mit Schmiermittel, die letztlich zu einem vorzeitigen Verschleiß der Betriebskomponenten bzw. einer unerwünschten Kontamination der Umwelt mit übermäßig freigesetztem Schmiermittel führt, zu verhindern. Dies gilt auch gerade im Hinblick auf eine Verwendung biologisch abbaubarer Schmiermittel, die naturgemäß über eine gegenüber konventionellen Schmiermitteln geringere Brauchbarkeitsdauer verfügen und ein häufigeres Nachschmieren der Betriebskomponenten erforderlich machen.

Die Betriebskomponenten sind in zur Durchführung zugeordneter Arbeitsfunktionen vorgesehene Funktionsgruppen unterteilt, wobei die Kontrolleinrichtung eine Schmierung der Betriebskomponenten einer bestimmten Funktionsgruppe veranlasst, wenn diese durch Auswertung der Betriebsinformationen aufgrund einer vorausgegangenen Verwendung der zugehörigen Arbeitsfunktionen auf einen zu kompensierenden Schmiermittelverlust schließt. Mit anderen Worten erfolgt die Schmierung der Betriebskomponenten gruppenweise, wobei die Kontrolleinrichtung zur Beurteilung der Notwendigkeit der Schmierung die Häufigkeit und/oder Dauer, mit der die zugehörigen Arbeitsfunktionen innerhalb eines bestimmten Zeitraums ausgeführt werden, heranziehen kann. Überschreitet diese einen für die jeweilige Funktionsgruppe spezifischen Schwellenwert, so veranlasst die Kontrolleinrichtung die Schmierung der betreffenden Funktionsgruppe durch Schließen der zugehörigen Versorgungsventile und Inbetriebnahme der Schmiermittelpumpe.

Das Fahrzeugsystem ist beispielsweise als landwirtschaftliches Fahrzeuggespann ausgebildet, das aus einem Traktor sowie einem daran angebrachten Anbau- oder Zusatzgerät besteht. Sowohl dem Traktor als auch dem Anbau- oder Zusatzgerät sind eine Vielzahl von Betriebskomponenten zur Durchführung zugehöriger Arbeitsfunktionen zugeordnet. Bei diesen - mit einer Verlustschmierung ausgestatteten - Betriebskomponenten handelt es sich typischerweise um Hydraulikzylinder, Motoren, Getriebe und Lager.

Die Betriebsinformationen der Betriebskomponenten stehen insbesondere auf einem ISOBUS-Datennetzwerk des Traktors einschließlich einer sich auf das Anbau- oder Zusatzgerät erstreckenden Netzwerkerweiterung zur Verfügung und können dort seitens der Kontrolleinrichtung über eine zugehörige ISOBUS-Schnittstelle ausgelesen werden. Eine Zuordnung der von der Kontrolleinrichtung ausgelesenen Betriebsinformationen zu einer bestimmten Betriebskomponente erfolgt hierbei durch Mitübertragung entsprechender Identifikationsdaten an die Kontrolleinrichtung.

Handelt es sich um ein nicht ISOBUS-fähiges Anbau- oder Zusatzgerät, so lassen sich die Betriebsinformationen auch aus Betätigungssignalen einer in dem Traktor vorgesehenen hydraulischen und/oder elektrischen Anbau- bzw. Zusatzgerätesteuerung ableiten.

Vorteilhafte Ausführungen der erfindungsgemäßen Einrichtung gehen aus den Unteransprüchen hervor.

Der Schmiermittelbedarf bzw. Schmiermittelverbrauch der jeweiligen Betriebskomponente ergibt sich entweder als Folge eines betriebsbedingt auftretenden Schmiermittelverlusts oder aber aufgrund wartungsbedingt einzuhaltender Schmierintervalle. Die Betriebsinformationen betreffen daher vorzugsweise die seit der letzten Schmierung vergangene Betriebszeit der jeweiligen Betriebskomponente und/oder deren betriebsbedingte Auslastung einschließlich gegebenenfalls auftretender Lastspitzen. Die betriebsbedingte Auslastung ergibt sich beispielsweise aus der Häufigkeit und/oder Dauer, mit der die Betriebskomponente innerhalb eines bestimmten Zeitraums betätigt wird.

Hierbei kann die Kontrolleinrichtung zur Beurteilung der Notwendigkeit der Schmierung einen Vergleich der seit der letzten Schmierung vergangenen Betriebszeit der jeweiligen Betriebskomponente und/oder deren betriebsbedingte Auslastung mit für die jeweilige Betriebskomponente spezifischen Schwellenwerten vornehmen, die in einer von der Kontrolleinrichtung umfassten Speichereinheit abgelegt sind. Die für die jeweilige Betriebskomponente spezifischen Schwellenwerte sind herstellerseitig vorgegeben, zusätzlich ist jedoch auch eine bedienerseitige Konfiguration über eine mit der Kontrolleinrichtung in Verbindung stehende Benutzerschnittstelle und/oder eine Anpassung in Abhängigkeit des verwendeten Schmiermittels denkbar, wobei die Schwellenwerte im Falle eines biologisch abbaubaren Schmiermittels entsprechend niedriger anzusetzen sind.

Stellt die Kontrolleinrichtung durch Auswertung der Betriebsinformationen fest, dass die für die jeweilige Betriebskomponente spezifischen Schwellenwerte überschritten sind, veranlasst diese die Schmierung der jeweiligen Betriebskomponente durch Schließen des zugehörigen Versorgungsventils und Inbetriebnahme der Schmiermittelpumpe.

Hierbei kann die Kontrolleinrichtung die Versorgungsventile derart ansteuern, dass die Schmierung der Betriebskomponenten mit einer der vorausgegangenen Verwendung der jeweiligen Arbeitsfunktion angepassten Schmiermittelmenge erfolgt.

Die einzusteuernde Schmiermittelmenge wird typischerweise empirisch für die betreffende Arbeitsfunktion bzw. Funktionsgruppe ermittelt und lässt sich insbesondere gemeinsam mit dem zugehörigen spezifischen Schwellenwert über die mit der Kontrolleinrichtung in Verbindung stehende Benutzerschnittstelle bedienerseitig konfigurieren. Zusätzlich ist eine Anpassung des spezifischen Schwellenwert und/ oder der Schmiermittelmenge in Abhängigkeit des verwendeten Schmiermittels denkbar.

Soweit Arbeitsfunktionen bzw. Funktionsgruppen des Anbau- oder Zusatzgeräts betroffen sind, können die insofern vorgesehenen spezifischen Schwellenwerte bzw. einzusteuernden Schmiermittelmengen in Form entsprechender Datensätze in der von der Kontrolleinrichtung umfassten Speichereinheit abgelegt sein, wobei die Auswahl des passenden Datensatzes im Falle eines ISOBUS-fähigen Anbau- oder Zusatzgeräts automatisch erfolgen kann, indem beim Anschließen der Netzwerkerweiterung des Anbau- oder Zusatzgeräts an das ISOBUS-Datennetzwerk des Traktors eine Übermittlung von Identifikationsdaten bezüglich des Gerätemodells an die Kontrolleinrichtung erfolgt. Denkbar ist zudem die Verwendung eines dem Anbau- oder Zusatzgeräts zugeordneten Transponders, der die Identifikationsdaten über eine RFID- oder Bluetooth-Datenübertragungsstrecke an eine mit der Kontrolleinrichtung in Verbindung stehende Empfangseinrichtung sendet. Alternativ kann der passende Datensatz auch über die mit der Kontrolleinrichtung in Verbindung stehende Benutzerschnittstelle manuell ausgewählt werden.

Im Falle eines ISOBUS-fähigen Anbau- oder Zusatzgeräts bzw. der Verwendung einer RFID- oder Bluetooth-Datenübertragungsstrecke kann zusätzlich eine Mitübermittlung der beim letzten Betrieb des Anbau- oder Zusatzgeräts angefallenen Betriebszeit und/oder betriebsbedingten Auslastung erfolgen, um diese bei der Beurteilung des Schmiermittelbedarfs bzw. Schmiermittelverbrauchs im weiteren Verlauf anzurechnen.

Die Datensätze stehen beispielsweise in einer externen Datenbank bzw. Daten-Cloud zur Verfügung, auf die die Kontrolleinrichtung über eine GSM- oder UMTS-Schnittstelle drahtlos zugreifen kann. So ist es insbesondere möglich, dass die Kontrolleinrichtung beim Anschließen eines bislang nicht genutzten ISOBUS-fähigen Anbau- oder Zusatzgeräts anhand der für das betreffende Gerätemodell empfangenen Identifikationsdaten den passenden Datensatz aus der externen Datenbank bzw. Daten-Cloud herunterlädt und in der Speichereinheit ablegt, sodass dieser bei einer wiederholten Verwendung des gleichen Gerätemodells zur Verfügung steht.

Des Weiteren kann ein mit dem Schmiermittelverteiler kommunizierender Schmiermittelkuppler vorgesehen sein, an dem sich die Betriebskomponenten des Anbau- oder Zusatzgeräts, genauer gesagt ein mit diesen kommunizierendes Versorgungsleitungssystem mit dem Schmiermittelverteiler lösbar fluidisch verbinden lässt. Der Schmiermittelkuppler ist üblicherweise in räumlicher Nähe eines im Heck- bzw. Frontbereich des Traktors befindlichen Steuerventilblocks angebracht, an dem sich von dem Anbau- oder Zusatzgerät umfasste Hydraulikkuppler anschließen lassen. Letztere stehen mit hydraulisch betriebenen Aggregaten zur Durchführung zugehöriger Arbeitsfunktionen des Anbau- oder Zusatzgeräts in Verbindung.

Des Weiteren besteht die Möglichkeit, dass die Schmierung der Betriebskomponenten manuell über eine mit der Kontrolleinrichtung in Verbindung stehende Benutzerschnittstelle veranlassbar ist. Dies ist unter anderem dann von Vorteil, wenn beim Reinigen des Fahrzeugsystems mittels eines Hochdruckreinigers das Schmiermittel aus den Betriebskomponenten ausgewaschen wird und ein Nachschmieren notwendig macht.

Dabei ist es vorstellbar, dass die Schmierung lediglich für Betriebskomponenten einer über die Benutzerschnittstelle manuell auswählbaren Funktionsgruppe oder aber für alle Betriebskomponenten unabhängig von ihrer Zugehörigkeit zu einer bestimmten Funktionsgruppe erfolgt. Eine Verschwendung von Schmiermittel lässt sich so weitgehend vermeiden, da sich das Nachschmieren auf die von der Reinigung betroffenen Betriebskomponenten beschränken lässt.

Um im Rahmen der Durchführung von Wartungsarbeiten eine auf einen Schmiermittelmangel zurückgehende Schädigung der Betriebskomponenten erkennen zu können, besteht ferner die Möglichkeit, dass die Kontrolleinrichtung einen zeitlichen Füllstandsverlauf des Schmiermittelreservoirs erfasst sowie durch Ablegen zugehöriger Füllstandsinformationen auslesbar in der von der Kontrolleinrichtung umfassten Speichereinheit dokumentiert.

Ferner kann die Kontrolleinrichtung Daten über die Einhaltung herstellerseitig vorgegebener Schmierintervalle, über bedienerseitige Konfigurationen, wie auch über die von einem Schmiermittelmangel betroffenen Betriebskomponenten an eine Datenkommunikationsschnittstelle zur drahtlosen Übermittlung an eine Datenzentrale weiterleiten. So kann beispielsweise ein Lohnunternehmer kritische Betriebszustände aufgrund einer unsachgemäßen Schmierung frühzeitig erkennen und in der Werkstatt durch Rückruf des Fahrzeugsystems beheben. Auch ist eine verbesserte Betriebsanalyse der Betriebskomponenten zur Identifizierung möglicher Schadensursachen bei der Durchführung von Wartungsarbeiten möglich.

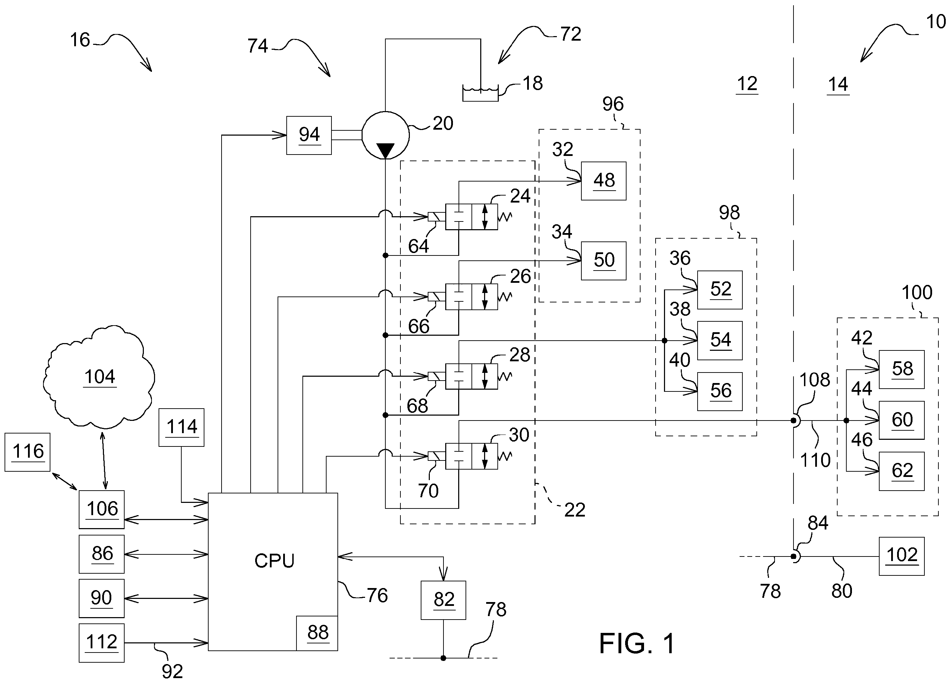

Die erfindungsgemäße Einrichtung wird im Folgenden anhand der beigefügten Zeichnung näher erläutert.

Die einzige Figur zeigt eine beispielhafte Ausführungsform der erfindungsgemäßen Einrichtung zur Schmiermittelversorgung eines Fahrzeugsystems.

Das Fahrzeugsystem ist im vorliegenden Fall als (nicht näher dargestelltes) landwirtschaftliches Fahrzeuggespann 10 ausgebildet, das aus einem Traktor 12 sowie einem daran angebrachten Anbau- oder Zusatzgerät 14 besteht.

Die in dem Traktor 12 angeordnete Einrichtung 16 zur Schmiermittelversorgung umfasst eine aus einem Schmiermittelreservoir 18 gespeiste Schmiermittelpumpe 20 und einen Schmiermittelverteiler 22, der eine Vielzahl individuell ansteuerbarer Versorgungsventile 24, ..., 30 zur Einsteuerung eines Schmiermittels in Schmierpunkte 32, ..., 46 zugehöriger Betriebskomponenten 48, ..., 62 aufweist. Die Versorgungsventile 24, ..., 30 des Schmiermittelverteilers 22 sind als Magnetventile ausgebildet, die sich durch Bestromung eines zugehörigen Solenoids 64, ..., 70 zwischen einer geöffneten und einer geschlossenen Stellung umschalten lassen. Stellvertretend sind vier Versorgungsventile 24, ..., 30 zur Versorgung von insgesamt acht Betriebskomponenten 48, ..., 62 mit Schmiermittel dargestellt, es kann sich jedoch auch um beliebige andere Anzahl handeln.

Beispielsgemäß sind die Betriebskomponenten 48, ..., 60 sowohl dem Traktor 12 als auch dem Anbau- oder Zusatzgerät 14 zugeordnet. Die Betriebskomponenten 48, ..., 60 sind mit einer sogenannten Verlustschmierung ausgestattet, bei der beim Nachschmieren das verschmutzte Schmiermittel verdrängt wird und an entsprechender Stelle der jeweiligen Betriebskomponente 48, ..., 60 nach außen abgeführt wird. Typischerweise handelt es sich bei den Betriebskomponenten 48, ..., 60 um Hydraulikzylinder, Getriebe, Motoren und Lager.

Das Schmiermittelreservoir 18 ist vorliegend durch einen Hydraulikölsumpf 72 gebildet, der Bestandteil eines Hydrauliksystems 74 des Traktors 12 ist. Das Hydrauliksystem 74 dient der Hydraulikölversorgung diverser hydraulisch betriebener Aggregate des Traktors 12 einschließlich eines im Heck- bzw. Frontbereich angeordneten Steuerventilblocks, an dem sich von dem Anbau- oder Zusatzgerät 14 umfasste Hydraulikkuppler anschließen lassen. Letztere stehen mit hydraulisch betriebenen Aggregaten zur Durchführung zugehöriger Arbeitsfunktionen des Anbau- oder Zusatzgeräts 14 in Verbindung. Die hydraulisch betriebenen Aggregate des Traktors 12 wie auch der Steuerventilblock nebst daran angeschlossenen Hydraulikkupplern sind aus Gründen der Übersichtlichkeit nicht dargestellt.

Des Weiteren weist die Einrichtung 10 eine mikroprozessorgesteuerte Kontrolleinrichtung 76 auf, die die Versorgungsventile 24, ..., 30 zur Schmierung der Betriebskomponenten 48, ..., 62 nach Maßgabe eines aus Betriebsinformationen der Betriebskomponenten 48, ..., 62 abgeleiteten Schmiermittelbedarfs bzw. Schmiermittelverbrauchs ansteuert.

Die Betriebsinformationen der Betriebskomponenten 48, ..., 62 stehen auf einem ISOBUS-Datennetzwerk 78 des Traktors 12 einschließlich einer sich auf das Anbau- oder Zusatzgerät 14 erstreckenden Netzwerkerweiterung 80 zur Verfügung und können dort seitens der Kontrolleinrichtung 76 über eine zugehörige ISOBUS-Schnittstelle 82 ausgelesen werden. Eine Zuordnung der von der Kontrolleinrichtung 76 ausgelesenen Betriebsinformationen zu einer bestimmten Betriebskomponente 48, ..., 62 erfolgt hierbei durch Mitübertragung entsprechender Identifikationsdaten an die Kontrolleinrichtung 76. Die dem Anbau- oder Zusatzgerät 14 zugeordnete Netzwerkerweiterung 80 ist hierbei über einen ISOBUS-Steckverbinder 84 (ISOBUS Breakaway Connector) mit dem ISOBUS-Datennetzwerk 78 des Traktors 12 lösbar verbunden.

Handelt es sich um ein nicht ISOBUS-fähiges Anbau- oder Zusatzgerät 14, so leitet die Kontrolleinrichtung 76 die Betriebsinformationen aus Betätigungssignalen einer in dem Traktor 12 vorgesehenen hydraulischen und/oder elektrischen Anbau- bzw. Zusatzgerätesteuerung 86 ab.

Der Schmiermittelbedarf bzw. Schmiermittelverbrauch der jeweiligen Betriebskomponente 48, ..., 62 ergibt sich entweder als Folge eines betriebsbedingt auftretenden Schmiermittelverlusts oder aber aufgrund wartungsbedingt einzuhaltender Schmierintervalle. Die Betriebsinformationen betreffen daher die seit der letzten Schmierung vergangene Betriebszeit der jeweiligen Betriebskomponente 48, ..., 62 und/oder deren betriebsbedingte Auslastung einschließlich gegebenenfalls auftretender Lastspitzen. Die betriebsbedingte Auslastung ergibt sich hierbei aus der Häufigkeit und/oder Dauer, mit der die Betriebskomponente 48, ..., 62 innerhalb eines bestimmten Zeitraums betätigt wird.

Zur Beurteilung der Notwendigkeit der Schmierung nimmt die Kontrolleinrichtung 76 einen Vergleich der vorgenannten Größen mit für die jeweilige Betriebskomponente 48, ..., 62 spezifischen Schwellenwerten vor, die in einer von der Kontrolleinrichtung 76 umfassten Speichereinheit 88 abgelegt sind. Die für die jeweilige Betriebskomponente 48, ..., 62 spezifischen Schwellenwerte sind herstellerseitig vorgegeben, lassen sich jedoch zusätzlich über eine mit der Kontrolleinrichtung 76 in Verbindung stehende Benutzerschnittstelle 90 bedienerseitig konfigurieren, sodass bei Bedarf eine individuelle Anpassung möglich ist. Bei der Benutzerschnittstelle 90 handelt es sich um einen berührungsempfindlichen Bildschirm, der über einen CAN-Datenbus 92 des Traktors 12 mit der Kontrolleinrichtung 76 kommuniziert.

Stellt die Kontrolleinrichtung 76 durch Auswertung der Betriebsinformationen fest, dass die für die jeweilige Betriebskomponente 48, ..., 62 spezifischen Schwellenwerte überschritten sind, veranlasst diese die Schmierung der jeweiligen Betriebskomponente 48, ..., 62 durch Schließen des zugehörigen Versorgungsventils 64, ...., 70 und Inbetriebnahme der Schmiermittelpumpe 20 durch Bestromung eines elektrischen Pumpenmotors 94.

Die Betriebskomponenten 48, ..., 62 sind in zur Durchführung zugeordneter Arbeitsfunktionen vorgesehene Funktionsgruppen 96, 98, 100 unterteilt, wobei die Kontrolleinrichtung 76 eine Schmierung der Betriebskomponenten 48, ..., 62 einer bestimmten Funktionsgruppe 96, 98, 100 veranlasst, wenn diese durch Auswertung der Betriebsinformationen aufgrund einer vorausgegangenen Verwendung der zugehörigen Arbeitsfunktionen auf einen zu kompensierenden Schmiermittelverlust schließt.

Mit anderen Worten erfolgt die Schmierung der Betriebskomponenten 48, ..., 62 gruppenweise, wobei die Kontrolleinrichtung 76 zur Beurteilung der Notwendigkeit der Schmierung die Häufigkeit und/oder Dauer, mit der die zugehörigen Arbeitsfunktionen innerhalb eines bestimmten Zeitraums ausgeführt werden, heranzieht. Überschreitet diese einen für die jeweilige Funktionsgruppe 96, 98, 100 spezifischen Schwellenwert, so veranlasst die Kontrolleinrichtung 76 die Schmierung der von der Funktionsgruppe 96, 98, 100 umfassten Betriebskomponenten 48, ..., 62 durch Schließen der betreffenden Versorgungsventile 64, ..., 70 und Inbetriebnahme der Schmiermittelpumpe 20 durch Bestromung des elektrischen Pumpenmotors 94.

Sämtliche in die Durchführung einer bestimmten Arbeitsfunktion involvierte Betriebskomponenten bilden somit eine gemeinsame Funktionsgruppe. Lediglich zur Veranschaulichung seien die beiden nachfolgenden Beispiele genannt:

| **Arbeitsfunktion** | **Funktionsgruppe** - **betroffene Betriebskomponenten** |
|---|---|
| Ladearbeiten mittels eines am Traktor angebrachten Frontladers | Antriebsstrang des Traktors, Stellelemente (Hydraulikzylinder) des Frontladers |
| Mäharbeiten mittels eines an einem Front- bzw. Heckkraftheber des Traktors angebrachten Mähgeräts | Antriebsstrang des Traktors, Stellelemente (Hydraulikzylinder) des Front- bzw. Heckkrafthebers, Antriebsaggregate des Mähgeräts |

Wie zu erkennen ist, können ein und dieselben Betriebskomponenten im Rahmen verschiedener Arbeitsfunktionen mehreren Funktionsgruppen gleichzeitig zugewiesen sein.

Hierbei steuert die Kontrolleinrichtung 76 die Versorgungsventile 64, ..., 70 derart an, dass die Schmierung der Betriebskomponenten 48, ..., 62 mit einer der vorausgegangenen Verwendung der jeweiligen Arbeitsfunktion angepassten Schmiermittelmenge erfolgt. Die einzusteuernde Schmiermittelmenge wird empirisch für die betreffende Arbeitsfunktion bzw. Funktionsgruppe 96, 98, 100 ermittelt und lässt sich gemeinsam mit dem zugehörigen spezifischen Schwellenwert über die mit der Kontrolleinrichtung 76 in Verbindung stehende Benutzerschnittstelle 90 bedienerseitig konfigurieren. Soweit Arbeitsfunktionen bzw. Funktionsgruppen 96, 98, 100 des Anbau- oder Zusatzgeräts 14 betroffen sind, sind die insofern vorgesehenen spezifischen Schwellenwerte bzw. einzusteuernden Schmiermittelmengen in Form entsprechender Datensätze in der von der Kontrolleinrichtung 76 umfassten Speichereinheit 88 abgelegt, wobei die Auswahl des passenden Datensatzes im Falle eines ISOBUS-fähigen Anbau- oder Zusatzgeräts 14 automatisch erfolgt, indem beim Anschließen der Netzwerkerweiterung 80 des Anbau- oder Zusatzgeräts 14 an das ISOBUS-Datennetzwerk 78 des Traktors 12 seitens eines Jobrechners 102 eine Übermittlung von Identifikationsdaten bezüglich des Gerätemodells an die Kontrolleinrichtung 76 erfolgt. Alternativ wird der passende Datensatz über die mit der Kontrolleinrichtung 76 in Verbindung stehende Benutzerschnittstelle 90 manuell ausgewählt.

Die Datensätze stehen in einer externen Datenbank bzw. Daten-Cloud 104 zur Verfügung, auf die die Kontrolleinrichtung 76 über eine GSM- oder UMTS-Schnittstelle 106 drahtlos zugreifen kann, wobei die Kontrolleinrichtung 76 beim Anschließen eines bislang nicht genutzten ISOBUS-fähigen Anbau- oder Zusatzgeräts 14 anhand der für das betreffende Gerätemodell empfangenen Identifikationsdaten den passenden Datensatz aus der externen Datenbank bzw. Daten-Cloud 104 herunterlädt und in der Speichereinheit 90 ablegt, sodass dieser bei einer wiederholten Verwendung des gleichen Gerätemodells zur Verfügung steht.

Beispielsgemäß ist ein Schmiermittelkuppler 108 vorgesehen, an dem sich die Betriebskomponenten 58, ..., 62 des Anbau- oder Zusatzgeräts 14, genauer gesagt ein mit diesen kommunizierendes Versorgungsleitungssystem 110 mit dem Schmiermittelverteiler 22 lösbar fluidisch verbinden lässt. Der Schmiermittelkuppler 108 ist in räumlicher Nähe des im Heck- bzw. Frontbereich des Traktors 12 befindlichen Steuerventilblocks angebracht. Der Anschlusszustand wird mittels eines mit der Kontrolleinrichtung 76 verbundenen Kupplungssensors 112 überwacht, wobei bei Erkennung einer fehlerhaft hergestellten Kupplungsverbindung eine Schmierung der dem Anbau- oder Zusatzgerät 14 zugeordneten Betriebskomponenten 58, ..., 62 unterbleibt. Der Übersichtlichkeit halber ist lediglich ein einzelner Schmiermittelkuppler 108 dargestellt, tatsächlich sind aber sowohl im Hack- als auch im Frontbereich des Traktors 12 separate Schmiermittelkuppler vorgesehen, sodass sich zumindest zwei am Traktor 12 anbringbare Anbau- oder Zusatzgeräte mit Schmiermittel versorgen lassen.

Zusätzlich ist die Schmierung der Betriebskomponenten 48, ..., 62 manuell über die mit der Kontrolleinrichtung 76 in Verbindung stehende Benutzerschnittstelle 90 veranlassbar. Dies ist unter anderem dann von Vorteil, wenn beim Reinigen des Traktors 12 bzw. des Anbau- oder Zusatzgeräts mittels eines Hochdruckreinigers das Schmiermittel aus den Betriebskomponenten 48, ..., 62 ausgewaschen wird und ein Nachschmieren notwendig macht.

Hierbei erfolgt die Schmierung lediglich für Betriebskomponenten 48, ..., 62 einer über die Benutzerschnittstelle 90 manuell auswählbaren Funktionsgruppe 96, 98, 100 oder aber für alle Betriebskomponenten 48, ..., 62 unabhängig von ihrer Zugehörigkeit zu einer bestimmten Funktionsgruppe 96, 98, 100. Eine Verschwendung von Schmiermittel lässt sich so weitgehend vermeiden, da sich das Nachschmieren auf die von der Reinigung betroffenen Betriebskomponenten 48, ..., 62 beschränken lässt.

Um im Rahmen der Durchführung von Wartungsarbeiten eine auf einen Schmiermittelmangel zurückgehende Schädigung der Betriebskomponenten 48, ..., 62 erkennen zu können, erfasst die Kontrolleinrichtung 76 einen zeitlichen Füllstandsverlauf des Schmiermittelreservoirs 18 und dokumentiert diesen durch Ablegen zugehöriger Füllstandsinformationen auslesbar in der von der Kontrolleinrichtung 76 umfassten Speichereinheit 88. Die Bereitstellung der Füllstandsinformationen erfolgt mittels eines von dem Hydrauliksystem 74 umfassten Füllstandssensors 114.

Ferner leitet die Kontrolleinrichtung 76 Daten über die Einhaltung herstellerseitig vorgegebener Schmierintervalle, über bedienerseitige Konfigurationen, wie auch über die von einem Schmiermittelmangel betroffenen Betriebskomponenten 48, ..., 62 an die GSM- oder UMTS-Schnittstelle 106 zur drahtlosen Übermittlung an eine Datenzentrale 116 weiter. So kann beispielsweise ein Lohnunternehmer kritische Betriebszustände aufgrund einer unsachgemäßen Schmierung frühzeitig erkennen und in der Werkstatt durch Rückruf des landwirtschaftlichen Fahrzeuggespanns 10 beheben. Auch ist eine verbesserte Betriebsanalyse der Betriebskomponenten 48, ..., 62 zur Identifizierung möglicher Schadensursachen bei der Durchführung von Wartungsarbeiten möglich.

## Patentansprüche

1. Einrichtung zur Schmiermittelversorgung eines Fahrzeugsystems, mit einer aus einem Schmiermittelreservoir (18) gespeisten Schmiermittelpumpe (20) und einem Schmiermittelverteiler (22), der eine Vielzahl individuell ansteuerbarer Versorgungsventile (24, ..., 30) zur Einsteuerung eines Schmiermittels in Schmierpunkte (32, ..., 46) zugehöriger Betriebskomponenten (48, ..., 62) aufweist, wobei eine Kontrolleinrichtung (76) vorhanden ist, die die Versorgungsventile (24, ..., 30) zur Schmierung der Betriebskomponenten (48, ..., 62) nach Maßgabe eines aus Betriebsinformationen der Betriebskomponenten (48, ..., 62) abgeleiteten Schmiermittelbedarfs bzw. Schmiermittelverbrauchs ansteuert, **dadurch gekennzeichnet, dass** die Betriebskomponenten (48, ..., 62) in zur Durchführung zugeordneter Arbeitsfunktionen vorgesehene Funktionsgruppen (96, 98, 100) unterteilt sind, wobei die Kontrolleinrichtung (76) eine Schmierung der Betriebskomponenten (48, ..., 62) einer bestimmten Funktionsgruppe (96, 98, 100) veranlasst, wenn diese durch Auswertung der Betriebsinformationen aufgrund einer vorausgegangenen Verwendung der zugehörigen Arbeitsfunktionen auf einen zu kompensierenden Schmiermittelverlust schließt.

2. Einrichtung nach Anspruch 1, **dadurch gekennzeichnet, dass** die Betriebsinformationen die seit der letzten Schmierung vergangene Betriebszeit der jeweiligen Betriebskomponente (48, ..., 62) und/oder deren betriebsbedingte Auslastung einschließlich gegebenenfalls auftretender Lastspitzen betreffen.

3. Einrichtung nach Anspruch 1 oder 2, **dadurch gekennzeichnet, dass** die Kontrolleinrichtung (76) die Versorgungsventile (24, ..., 30) derart ansteuert, dass die Schmierung der Betriebskomponenten (48, ..., 62) mit einer der vorausgegangenen Verwendung der jeweiligen Arbeitsfunktion angepassten Schmiermittelmenge erfolgt.

4. Einrichtung nach wenigstens einem der vorhergehenden Ansprüche, **dadurch gekennzeichnet, dass** die Schmierung der Betriebskomponenten (48, ..., 62) manuell über eine mit der Kontrolleinrichtung (76) in Verbindung stehende Benutzerschnittstelle (90) veranlassbar ist.

5. Einrichtung nach Anspruch 4, **dadurch gekennzeichnet, dass** die Schmierung lediglich für Betriebskomponenten (48, ..., 62) einer über die Benutzerschnittstelle (90) manuell auswählbaren Funktionsgruppe (96, 98, 100) oder aber für alle Betriebskomponenten (48, ..., 62) unabhängig von ihrer Zugehörigkeit zu einer bestimmten Funktionsgruppe (96, 98, 100) erfolgt.

6. Einrichtung nach wenigstens einem der vorhergehenden Ansprüche, **dadurch gekennzeichnet, dass** die Kontrolleinrichtung (76) einen zeitlichen Füllstandsverlauf des Schmiermittelreservoirs (18) erfasst sowie durch Ablegen zugehöriger Füllstandsinformationen auslesbar in einer von der Kontrolleinrichtung (76) umfassten Speichereinheit (90) dokumentiert.

7. Einrichtung nach wenigstens einem der vorhergehenden Ansprüche, **dadurch gekennzeichnet, dass** die Kontrolleinrichtung (76) Daten über die Einhaltung herstellerseitig vorgegebener Schmierintervalle, über bedienerseitige Konfigurationen, wie auch über die von einem Schmiermittelmangel betroffenen Betriebskomponenten (48, ..., 62) an eine Datenkommunikationsschnittstelle (106) zur drahtlosen Übermittlung an eine Datenzentrale (116) weiterleitet.

8. Fahrzeugsystem, insbesondere landwirtschaftliches Fahrzeuggespann (10), mit einer Vielzahl zu schmierender Betriebskomponenten (48, ..., 62) und einer Einrichtung (16) nach wenigstens einem der vorhergehenden Ansprüche.

## Claims

1. Device for supplying lubricant to a vehicle system, with a lubricant pump (20), fed from a lubricant reservoir (18), and with a lubricant distributor (22) which exhibits a plurality of individually drivable supply valves (24, ..., 30) for injecting a lubricant into lubricating points (32, ..., 46) of associated operating components (48, ..., 62), a controlling device (76) being present which drives the supply valves (24, ..., 30) for the purpose of lubricating the operating components (48, ..., 62) in accordance with a lubricant demand or lubricant consumption derived from operational information pertaining to the operating components (48, ..., 62), **characterized in that** the operating components (48, ..., 62) have been subdivided into functional groups (96, 98, 100) provided for implementing assigned work functions, the controlling device (76) bringing about a lubrication of the operating components (48, ..., 62) of a particular functional group (96, 98, 100) if by evaluation of the operational information by reason of a preceding use of the associated work functions said controlling device infers a loss of lubricant which is to be compensated.

2. Device according to Claim 1, **characterized in that** the operational information relates to the operating-time of the respective operating component (48, ..., 62) that has elapsed since the last lubrication, and/or to the operation-dependent degree of utilization thereof, inclusive of load peaks arising where appropriate.

3. Device according to Claim 1 or 2, **characterized in that** the controlling device (76) drives the supply valves (24, ..., 30) in such a manner that the lubrication of the operating components (48, ..., 62) is undertaken with a quantity of lubricant adapted to the preceding use of the respective work function.

4. Device according to one of the preceding claims, **characterized in that** the lubrication of the operating components (48, ..., 62) can be brought about manually via a user interface (90) connected to the controlling device (76).

5. Device according to Claim 4, **characterized in that** the lubrication is undertaken merely for operating components (48, ..., 62) of a functional group (96, 98, 100) that is capable of being selected manually via the user interface (90), or alternatively for all operating components (48, ..., 62) independently of their affiliation to a particular functional group (96, 98, 100).

6. Device according to one of the preceding claims, **characterized in that** the controlling device (76) registers a temporal filling-level progression of the lubricant reservoir (18) and also documents said filling-level progression by storing associated filling-level information in readable manner in a memory unit (90) encompassed by the controlling device (76).

7. Device according to one of the preceding claims, **characterized in that** the controlling device (76) relays data concerning the compliance with lubrication intervals predetermined by the manufacturer, concerning configurations by an operator, and also concerning the operating components (48, ..., 62) affected by a lack of lubricant, to a data-communications interface (106) for wireless communication to a data center (116).

8. Vehicle system, in particular agricultural vehicle/implement pairing (10), with a plurality of operating components (48, ..., 62) to be lubricated and with a device (16) according to one of the preceding claims.

## Revendications

1. Dispositif d'alimentation en lubrifiant d'un système de véhicule, avec une pompe à lubrifiant (20) alimentée à partir d'un réservoir de lubrifiant (18) et un distributeur de lubrifiant (22), qui présente une multiplicité de soupapes d'alimentation (24, ..., 30) pouvant être commandées individuellement pour la fourniture d'un lubrifiant en des points de lubrification (32, ..., 46) de composants fonctionnels correspondants (48, ..., 62), dans lequel il se trouve un dispositif de contrôle (76), qui commande les soupapes d'alimentation (24, ..., 30) pour la lubrification des composants fonctionnels (48, ..., 62) en fonction d'une demande de lubrifiant ou d'une consommation de lubrifiant déduite d'informations de fonctionnement des composants fonctionnels (48, ..., 62), **caractérisé en ce que** les composants fonctionnels (48, ..., 62) sont partagés en groupes de fonctions (96, 98, 100) prévus pour l'exécution de fonctions de travail associées, dans lequel le dispositif de contrôle (76) provoque une lubrification des composants fonctionnels (48, ..., 62) d'un groupe de fonctions déterminé (96, 98, 100), lorsque celui-ci conclut à une perte de lubrifiant à compenser, par l'évaluation des informations de fonctionnement sur la base d'une utilisation antérieure des fonctions de travail correspondantes.

2. Dispositif selon la revendication 1, **caractérisé en ce que** les informations de fonctionnement concernent le temps de fonctionnement des composants fonctionnels respectifs (48, ..., 62) écoulé depuis la dernière lubrification et/ou leur charge de fonctionnement y compris les pics de charge éventuellement survenus.

3. Dispositif selon la revendication 1 ou 2, **caractérisé en ce que** le dispositif de contrôle (76) commande les soupapes d'alimentation (24, ..., 30) de telle manière que la lubrification des composants fonctionnels (48, ..., 62) se produise avec une quantité de lubrifiant adaptée à l'utilisation antérieure de la fonction de travail respective.

4. Dispositif selon au moins une des revendications précédentes, **caractérisé en ce que** la lubrification des composants fonctionnels (48, ..., 62) peut être provoquée manuellement par une interface d'utilisateur (90) se trouvant en relation avec le dispositif de contrôle (76).

5. Dispositif selon la revendication 4, **caractérisé en ce que** la lubrification se produit uniquement pour des composants fonctionnels (48, ..., 62) d'un groupe de fonctions (96, 98, 100) sélectionnable manuellement par l'interface d'utilisateur (90) ou cependant pour tous les composants fonctionnels (48, ..., 62) indépendamment de leur appartenance à un groupe de fonctions déterminé (96, 98, 100).

6. Dispositif selon au moins une des revendications précédentes, **caractérisé en ce que** le dispositif de contrôle (76) détecte une évolution temporelle du niveau de remplissage du réservoir de lubrifiant (18) et la consigne par le stockage des informations de niveau correspondantes de façon lisible dans une unité de mémoire (90) comprise dans le dispositif de contrôle (76) .

7. Dispositif selon au moins une des revendications précédentes, **caractérisé en ce que** le dispositif de contrôle (76) retransmet des données sur le respect d'intervalles de lubrification prédéterminés par le fabricant, sur des configurations chez l'utilisateur, ainsi que sur les composants fonctionnels (48, ..., 62) concernés par un déficit de lubrifiant à une interface de communication de données (106) en vue de la transmission sans fil à une centrale de données (116).

8. Système de véhicule, en particulier attelage de véhicule agricole (10), doté d'une multiplicité de composants fonctionnels à lubrifier (48, ..., 62) et d'un dispositif (16) selon au moins une des revendications précédentes.
